# DEMANDE DE BREVET EUROPEEN

(11) **EP 2 330 579 A1**
(43) Date de publication de la demande: **08.06.2011**
(21) Numéro de dépôt: 09306164.6
(22) Date de dépôt: 01.12.2009
(51) Int. Cl.: G08G 1/0965, G08G 1/123, H04M 3/493, G08G 1/017

(54) **Procédé et dispositif d'alerte de personnes en cas de détection par des tiers d'évènements concernant leurs véhicules**

(71) Demandeur: Alcatel Lucent, 75008 Paris (FR)
(72) Inventeur: Daurensan, Véronique, 91620 Nozay (FR); Boidart, Bertrand, 91620 Nozay (FR)
(74) Mandataire: Nicolle, Olivier

(57) **Abrégé**

Un procédé est destiné à permettre l'alerte de personnes qui disposent d'un véhicule ayant un numéro d'immatriculation et d'un équipement de communication (E1-E3) associé à un identifiant de communication. Ce procédé comprend les étapes suivantes en cas de détection d'un évènement concernant un véhicule immatriculé : i) alerter un service dédié en communiquant au moins le numéro d'immatriculation du véhicule, ii) déterminer dans des moyens de stockage (MS1), auxquels a accès le service dédié et dans lesquels sont stockés des identifiants de communication d'équipements de communication (E1-E3) de personnes en correspondance de numéros d'immatriculation de véhicules, l'identifiant de communication correspondant à ce numéro d'immatriculation communiqué, et iii) établir une communication avec l'équipement de communication (E1) qui est associé à cet identifiant de communication déterminé, afin de lui délivrer un message d'alerte relatif au véhicule identifié.

## Description

L'invention concerne le domaine des alertes aux personnes qui disposent de véhicules immatriculés, éventuellement de type automobile, qui sont autorisés à circuler sur des voies de circulation publiques.

Lorsqu'une personne circule sur une voie de circulation avec son véhicule, il peut arriver qu'elle ne s'aperçoive pas, ou que l'ordinateur de bord ne lui signale pas, qu'il existe un problème sur son véhicule, comme par exemple une galerie mal fixée, ou un vélo mal attaché, ou une fumée suspecte, ou le défaut de fonctionnement d'un feu ou projecteur, ou encore une portière ou un coffre mal fermé. Lorsqu'un tiers détecte l'existence d'un tel problème sur un véhicule et qu'il veut alerter son conducteur, il ne peut que faire des signes et/ou crier s'il est un piéton, ou bien klaxonner et/ou faire des appels de phares s'il est le conducteur d'un autre véhicule. Or, ces alertes n'ont qu'une faible probabilité d'attirer valablement l'attention du conducteur concerné. En outre, même si l'attention d'un conducteur a été attirée, il est peu probable que ce dernier comprenne immédiatement la raison pour laquelle un tiers a tenté de l'alerter.

Par ailleurs, dans certaines situations, comme par exemple lorsqu'un véhicule est garé et qu'il fait l'objet d'une tentative d'effraction ou de vol ou d'une dégradation, ou bien lorsqu'un véhicule est sur le point d'être transporté à la fourrière, il n'existe pas de solution pour alerter son propriétaire.

L'invention a donc pour but d'améliorer la situation.

Elle propose à cet effet un procédé, destiné à alerter des personnes disposant d'un véhicule ayant un numéro d'immatriculation et d'un équipement de communication associé à un identifiant de communication, et comprenant les étapes suivantes en cas de détection d'un événement (ou fait) concernant un véhicule immatriculé :
i) alerter un service dédié en communiquant au moins le numéro d'immatriculation de ce véhicule,
ii) déterminer dans des moyens de stockage, auxquels a accès le service dédié et dans lesquels sont stockés des identifiants de communication d'équipements de communication de personnes en correspondance de numéros d'immatriculation de véhicules, l'identifiant de communication correspondant à ce numéro d'immatriculation communiqué, et
iii) établir une communication avec l'équipement de communication, associé à cet identifiant de communication déterminé, pour lui délivrer un message d'alerte relatif au véhicule.

Le procédé d'alerte peut comporter d'autres caractéristiques qui peuvent être prises séparément ou en combinaison, et notamment :
- à l'étape i) on peut alerter le service dédié en communiquant le numéro d'immatriculation du véhicule et en décrivant au moins sommairement l'évènement ;
   ➢ à l'étape iii) on peut délivrer un message d'alerte décrivant au moins sommairement l'évènement concernant le véhicule ;
   ➢ à l'étape ii), après avoir déterminé l'identifiant de communication qui correspond au numéro d'immatriculation communiqué, on peut analyser la description de l'évènement afin de déterminer si il mérite d'être signalé par un message d'alerte (par exemple on peut effectuer une analyse sémantique de la description de l'évènement et comparer le résultat de cette analyse à des évènements répertoriés) ;
- à l'étape i) après que le service dédié ait été alerté une première fois d'un évènement concernant un véhicule immatriculé, on peut effectuer pendant une durée choisie un filtrage des alertes postérieures relatives à ce véhicule (par exemple si la personne concernée l'a préalablement autorisé) ;
   ➢ le filtrage peut consister à comparer entre eux les descriptifs d'évènement, et en cas de similitude entre le descriptif d'événement reçu en premier et un nouveau descriptif d'événement postérieur au premier, à stocker ce dernier, et en cas d'absence de similitude entre le descriptif d'événement reçu en premier et un nouveau descriptif d'évènement postérieur au premier, à établir une nouvelle communication avec l'équipement de communication, associé à l'identifiant de communication déterminé, pour délivrer un nouveau message d'alerte décrivant au moins sommairement ce nouvel évènement;
- en cas d'impossibilité d'établir la communication avec l'équipement de communication ou bien tant que le service dédié n'a pas reçu un accusé de réception du message d'alerte délivré, on peut réitérer l'étape iii), éventuellement périodiquement pendant une durée choisie ;
- à l'étape ii), après avoir déterminé l'identifiant de communication correspondant au numéro d'immatriculation communiqué, on peut déterminer le lieu où se trouve situé l'équipement de communication associé à cet identifiant de communication, et si cet équipement de communication est situé dans un véhicule qui circule sur une voie de circulation équipée de moyens d'avertissement, on peut adresser un message d'alerte désignant le véhicule ayant le numéro d'immatriculation communiqué, au moyen de certains au moins des moyens d'avertissement ;
   ➢ les moyens d'avertissement peuvent être choisis parmi (au moins) des panneaux d'affichage d'informations routières, configurables à distance et en temps réel, et une radio d'informations routières ;
   ➢ une fois que le service dédié a reçu un accusé de réception du message d'alerte délivré, on peut cesser d'utiliser les moyens d'avertissement.

Un mode de réalisation propose également un dispositif d'alerte, propre à travailler pour un serveur destiné à être connecté à un réseau de communication, et comprenant :
- des moyens de traitement agencés (ou conçus), en cas de réception par le serveur d'une alerte, signalant la détection d'un évènement concernant un véhicule immatriculé utilisé par une personne disposant en outre d'un équipement de communication associé à un identifiant de communication, et contenant au moins le numéro d'immatriculation de ce véhicule, pour déterminer dans des moyens de stockage, dans lesquels sont stockés des identifiants de communication d'équipements de communication de personnes en correspondance de numéros d'immatriculation de véhicules, l'identifiant de communication qui correspond à ce numéro d'immatriculation contenu dans l'alerte reçue, et
- des moyens de contrôle agencés (ou conçus) pour ordonner au serveur d'établir une communication avec l'équipement de communication, associé à l'identifiant de communication déterminé, de manière à lui délivrer un message d'alerte relatif au véhicule.

Le dispositif d'alerte peut comporter d'autres caractéristiques qui peuvent être prises séparément ou en combinaison, et notamment :
- ses moyens de contrôle peuvent être agencés, en cas de réception par le serveur d'une alerte qui contient en outre une description au moins sommaire de l'évènement, pour ordonner à ce serveur d'établir une communication avec l'équipement de communication, associé à l'identifiant de communication déterminé, de manière à lui délivrer un message d'alerte décrivant au moins sommairement l'évènement concernant le véhicule ;
   ➢ il peut comprendre des moyens d'analyse agencés, après que ses moyens de traitement ont déterminé l'identifiant de communication correspondant au numéro d'immatriculation communiqué, pour analyser la description de l'évènement afin de déterminer si il mérite d'être signalé par un message d'alerte ;
      - les moyens d'analyse peuvent être agencés, après traitement d'une première alerte relative à un évènement concernant un véhicule immatriculé, pour effectuer pendant une durée choisie une analyse des alertes postérieures relatives à ce véhicule ;
         o les moyens d'analyse peuvent être agencés pour comparer entre eux les descriptifs d'évènement, et en cas de similitude entre le descriptif d'évènement reçu en premier et un nouveau descriptif d'évènement postérieur au premier, pour stocker ce dernier, et en cas d'absence de similitude entre le descriptif d'évènement reçu en premier et un nouveau descriptif d'évènement postérieur au premier, pour alerter ses moyens de contrôle de sorte qu'ils ordonnent au serveur d'établir une nouvelle communication avec l'équipement de communication, associé à l'identifiant de communication déterminé, pour lui délivrer un nouveau message d'alerte décrivant au moins sommairement ce nouvel évènement;
- ses moyens de contrôle peuvent être agencés, en cas d'impossibilité d'établir la communication avec l'équipement de communication ou bien tant que le serveur n'a pas reçu un accusé de réception du message d'alerte délivré, pour ordonner à ce serveur d'effectuer une nouvelle tentative d'établissement de communication, éventuellement périodiquement pendant une durée choisie ;
- il peut comprendre des moyens de localisation agencés, après que ses moyens de traitement ont déterminé l'identifiant de communication correspondant au numéro d'immatriculation communiqué, pour déterminer le lieu où se trouve situé l'équipement de communication associé à cet identifiant de communication, et si cet équipement de communication est situé dans un véhicule qui circule sur une voie de circulation équipée de moyens d'avertissement, pour alerter ses moyens de contrôle de sorte qu'ils ordonnent au serveur d'établir une communication avec un équipement de réseau contrôlant ces moyens d'avertissement de manière à lui adresser un message d'alerte désignant le véhicule ayant le numéro d'immatriculation communiqué pour qu'il le diffuse au moyen de certains au moins des moyens d'avertissement ;
- ses moyens de contrôle peuvent être agencés, en cas de réception par le serveur d'un accusé de réception du message d'alerte délivré par l'équipement de communication concerné, pour ordonner au serveur d'établir une communication avec l'équipement de réseau pour lui demander de cesser de diffuser le message d'alerte.

Le dispositif d'alerte présenté ci-avant peut être agencé sous la forme d'un programme informatique destiné à être utilisé par un serveur propre à être connecté à un réseau de communication.

Un mode de réalisation propose également un serveur destiné à être connecté à un réseau de communication et comprenant un dispositif d'alerte du type de celui présenté ci-avant.

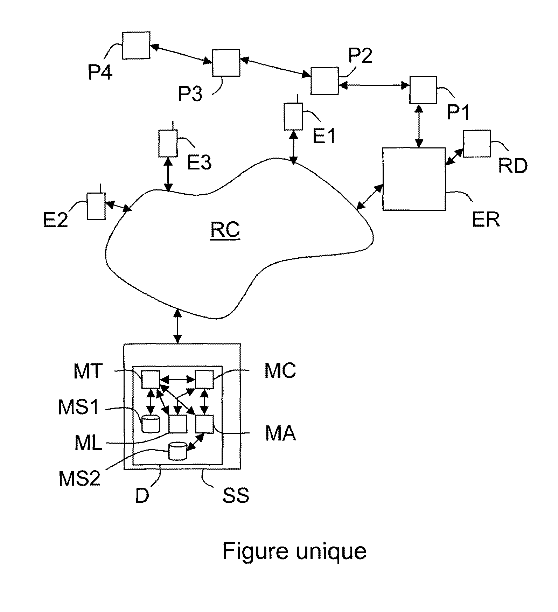

D'autres caractéristiques et avantages de l'invention apparaîtront à l'examen de la description détaillée ci-après, et du dessin annexé, sur lequel l'unique figure illustre de façon très schématique un réseau de communication auquel sont connectés des équipements de communication d'usagers, un serveur équipé d'un exemple de réalisation d'un dispositif d'alerte selon l'invention, et un équipement de réseau appartenant à un réseau autoroutier muni de deux types de moyens d'avertissement.

Le dessin annexé pourra non seulement servir à compléter l'invention, mais aussi contribuer à sa définition, le cas échéant.

L'invention a pour objet d'offrir un procédé, et un dispositif (D) associé, destiné à permettre d'alerter des personnes qui disposent d'un véhicule immatriculé et d'un équipement de communication (Ej) associé à un identifiant de communication, lorsqu'un évènement concernant leur véhicule a été détecté par un tiers.

Dans ce qui suit, on considère à titre d'exemple non limitatif que les véhicules immatriculés sont des véhicules automobiles, comme par exemple des voitures. Mais, l'invention n'est pas limitée à ce type de véhicule immatriculé. Elle concerne en effet tout véhicule disposant d'un numéro d'immatriculation répertorié et visible de l'extérieur par un tiers.

Par ailleurs, on considère dans ce qui suit, à titre d'exemple non limitatif, que les équipements de communication (Ej) des personnes, dits équipements d'usagers, sont des téléphones mobiles (ou cellulaires). Mais, l'invention n'est pas limitée à ce type d'équipement de communication. Elle concerne en effet tout type d'équipement de communication, filaire ou non filaire, et notamment les téléphones fixes ou mobiles, les ordinateurs fixes ou portables, et les assistants personnels numériques (ou PDAs) équipés d'un module de communication, éventuellement de type « smartphone ».

L'invention propose de mettre en oeuvre un procédé d'alerte au sein d'un système de communication du type de celui illustré (non limitativement) sur l'unique figure.

Cette mise en oeuvre nécessite que le système de communication comprenne au moins :
- un réseau de communication RC, de préférence de type sans fil (par exemple mobile ou cellulaire, tel qu'un réseau GSM, UMTS, CDMA 2000 ou LTE), et éventuellement connecté à l'internet. On notera que le réseau RC peut éventuellement être un ensemble de réseaux de communication filaire(s) et/ou non filaire(s) connectés les uns aux autres,
- un serveur SS connecté au, ou accessible via le, réseau de communication RC, et offrant (au moins) un service d'alerte de personnes, et
- des équipements de communication Ej de personnes, pouvant se connecter au, ou étant accessibles via le, réseau de communication RC. Ici l'indice j prend des valeurs comprises entre 1 et 3. Mais, il peut prendre n'importe quelle valeur supérieure ou égale à un (1).

Le procédé d'alerte selon l'invention comprend au moins trois étapes principales.

Une première étape principale (i) est mise en oeuvre chaque fois qu'est détecté un évènement (ou fait) concernant un véhicule immatriculé, utilisé par une personne abonnée au service d'alerte offert par l'invention.

Tout type d'évènement (ou fait) concernant un véhicule peut être ici envisagé. Ainsi, il pourra par exemple s'agir d'un problème relatif à un élément d'un véhicule, comme par exemple une galerie mal fixée, ou un vélo mal attaché, ou une fumée suspecte, ou un défaut de fonctionnement d'un feu ou projecteur, ou encore une portière ou un coffre mal fermé, ou bien d'une action en cours effectuée sur un véhicule par au moins une personne étrangère à ce véhicule, comme par exemple une tentative d'effraction ou de vol, ou une dégradation, ou bien un transport à la fourrière.

Cette première étape principale (i) consiste à alerter un service dédié en communiquant au moins le numéro d'immatriculation du véhicule qui est concerné par un évènement détecté.

Ce service d'alerte (dédié) est offert par le serveur SS. Il peut être accédé au moyen d'un identifiant de communication, comme par exemple un numéro de téléphone (éventuellement réduit).

Il est important de noter que l'alerte peut être donnée soit directement par la personne qui a détecté l'évènement, au moyen d'une communication établie avec le serveur SS au moyen d'un équipement de communication (par exemple son téléphone mobile), soit indirectement par une personne qui a été contactée par la personne qui a détecté l'évènement au moyen d'un équipement de communication (par exemple son téléphone mobile). Dans ce dernier cas, la personne contactée peut par exemple être un policier ou un opérateur d'un service d'urgence qui se charge ensuite d'établir une communication avec le serveur SS pour l'alerter.

Il est également important de noter que l'alerte peut être faite par un échange de propos lors d'un appel téléphonique, ou au moyen d'un message vocale délivré à une messagerie vocale, ou au moyen d'un message textuel, comme par exemple un courriel (ou « e-mail ») ou un message court de type SMS ou MMS.

On notera également que les équipements de communication des tiers (ou personnes) qui détectent les évènements peuvent comporter dans un menu une application dédiée qui permet, lorsqu'elle est chargée, de composer automatiquement le numéro de communication du serveur SS pour l'alerter.

Il est également important de noter que l'alerte peut éventuellement comporter une description (ou descriptif) au moins sommaire de l'évènement qui concerne le véhicule dont le numéro d'immatriculation est communiqué. En variante ou en complément, lorsque l'alerte est faite au moyen d'un message de type MMS, ce dernier peut être accompagné d'une photographie de l'évènement. En d'autres termes, un descriptif d'évènement peut être constitué d'une photographie et/ou d'au moins une phrase descriptive.

Si un descriptif reçu n'est pas similaire à un autre précédemment reçu pour le même véhicule, alors il est préférentiellement stocké dans des moyens de stockage MS2 en correspondance du numéro d'immatriculation du véhicule ainsi qu'éventuellement de sa date de réception, pour une raison qui sera expliquée plus loin.

Dans l'exemple de réalisation non limitatif illustré sur l'unique figure, les moyens de stockage MS2 font partie du dispositif (d'alerte) D. Mais, cela n'est pas obligatoire. Ils peuvent en effet faire partie du serveur SS.

Ces moyens de stockage MS2 peuvent être de tout type connu de l'homme de l'art. Il pourra donc s'agir d'une mémoire (éventuellement purement logicielle) ou d'une base de données.

Une deuxième étape principale (ii) du procédé selon l'invention est mise en oeuvre consécutivement à la réception d'une alerte par le serveur SS.

Cette deuxième étape principale (ii) peut par exemple être mise en oeuvre par un dispositif d'alerte D qui est associé au serveur SS.

On entend ici par « associé au serveur SS » le fait de faire partie de ce serveur SS, comme illustré non limitativement, ou d'être connecté à ce serveur SS. Par conséquent, un dispositif d'alerte D selon l'invention peut être réalisé sous la forme de modules logiciels (ou programme informatique), de circuits électroniques ou d'une combinaison de circuits électroniques et de modules logiciels.

Cette deuxième étape principale (ii) consiste à déterminer dans des moyens de stockage MS1, auxquels a accès le service d'alerte (dédié) et dans lesquels sont stockés des identifiants de communication d'équipements de communication Ej de personnes en correspondance de numéros d'immatriculation de véhicules, l'identifiant de communication qui correspond au numéro d'immatriculation qui a été communiqué dans l'alerte reçue (lors d'une première étape principale (i)).

Dans l'exemple de réalisation non limitatif illustré sur l'unique figure, les moyens de stockage MS1 font partie du dispositif (d'alerte) D. Mais, cela n'est pas obligatoire. Ils peuvent en effet faire partie du serveur SS, ou bien être localisés dans un autre équipement de réseau qui est accessible au dispositif D via ledit serveur SS.

Ces moyens de stockage MS1 peuvent être de tout type connu de l'homme de l'art. Il pourra donc s'agir d'une mémoire (éventuellement purement logicielle) ou d'une base de données.

Le dispositif D comprend des moyens (ou module) de traitement MT qui sont chargés d'effectuer la deuxième étape principale (ii), et donc qui sont capables d'accéder (directement ou indirectement) aux moyens de stockage MS1 afin d'y rechercher un identifiant de communication qui s'y trouve stocké en correspondance d'un numéro d'immatriculation qui a été communiqué dans une alerte reçue.

On notera que lors de la deuxième étape principale (ii), une fois qu'un identifiant de communication (correspondant à un numéro d'immatriculation communiqué) a été déterminé, on peut envisager de déterminer également le lieu où se trouve situé l'équipement de communication Ej qui est associé à cet identifiant de communication déterminé. Cette option est plus particulièrement utile lorsque l'équipement de communication Ej est situé dans un véhicule qui circule sur une voie de circulation équipée de moyens d'avertissement Pk et/ou RD, comme par exemple une autoroute.

On entend ici par « moyens d'avertissement » aussi bien des panneaux d'affichage d'informations routières Pk, qui sont installés au bord ou au dessus d'une voie de circulation et qui sont configurables à distance et en temps réel, qu'une radio d'informations routières RD qui est chargée de diffuser par voie d'ondes des programmes radiophoniques et des informations routières à caractère prioritaire pour les autoradios des véhicules. La diffusion d'informations par ces moyens d'avertissement Pk, RD est contrôlée par un équipement de contrôle ER qui fait partie d'un réseau (auto)routier.

Dans l'exemple de réalisation non limitatif illustré sur l'unique figure, l'indice k prend des valeurs comprises entre 1 et 4, mais il peut prendre n'importe quelle valeur supérieure ou égale à un (1). Par ailleurs, dans l'exemple de réalisation non limitatif illustré sur l'unique figure, le réseau (auto)routier comprend non seulement des panneaux d'affichage Pk, mais également une radio d'informations routières RD. Mais, cela n'est pas obligatoire. Il pourrait en effet ne comprendre que des panneaux d'affichage Pk ou bien qu'une radio d'informations routières RD.

On comprendra que grâce à un tel réseau (auto)routier, il est possible, lorsque l'on sait qu'un véhicule identifié circule sur l'une de ses voies de circulation, d'adresser un message d'alerte, désignant ce véhicule, à destination de son conducteur, au moyen de certains au moins de ses moyens d'avertissement Pk et/ou RD.

La localisation d'un équipement de communication Ej permet de déterminer non seulement la voie de circulation sur laquelle circule le véhicule qui le contient, mais également la portion de cette voie de circulation. Cela permet par exemple de n'afficher sélectivement un message d'alerte relatif à un véhicule que sur le(s) panneau(x) qui est/sont présent(s) sur cette portion de voie de circulation.

Comme illustré non limitativement, le dispositif D peut par exemple comprendre des moyens (module) de localisation ML agencés, lorsque le module de traitement MT a déterminé un identifiant de communication correspondant à un numéro d'immatriculation communiqué, pour déterminer le lieu où se trouve situé l'équipement de communication Ej qui est associé à cet identifiant de communication.

La localisation peut se faire par tout moyen connu de l'homme de l'art. Ainsi, elle peut par exemple être obtenue en appelant l'équipement de communication de la personne qui a donné l'alerte et donc qui vient de détecter le numéro d'immatriculation d'un véhicule, afin de demander à cette personne où elle se trouve, la voie sur laquelle elle circule et si le véhicule qu'elle a détecté circule sur la même voie qu'elle. Cela peut se faire au moyen d'un appel téléphonique ou bien d'un échange de messages électroniques (SMS, MMS ou e-mail). Elle peut être également estimée (au moins partiellement) en appelant l'opérateur de communication auquel est abonnée la personne qui a donné l'alerte et donc qui vient de détecter le numéro d'immatriculation d'un véhicule. Elle peut être également estimée (au moins partiellement) en appelant l'opérateur de communication auquel est abonnée la personne qui circule dans le véhicule détecté.

On notera que le module de localisation ML n'est pas chargé de calculer les positions géographiques, mais simplement de rechercher par tout moyen ces positions géographiques.

Une fois que le module de localisation ML dispose d'une estimée de la localisation d'un équipement de communication Ej identifié et donc du véhicule qui le transporte (de façon présumée), il peut déterminer si ce véhicule circule sur une voie de circulation équipée de moyens d'avertissement Pk et/ou RD. Pour ce faire, il dispose par exemple d'informations fournies par les gestionnaires des réseaux (auto)routiers. Dans la négative, le module de localisation ML cesse son intervention. En revanche, dans l'affirmative, le module de localisation ML alerte le module de contrôle MC de sorte qu'il ordonne au serveur SS d'établir une communication avec un équipement de réseau ER du réseau (auto)routier qu'emprunte le véhicule identifié. Cet équipement de réseau ER est par exemple celui qui contrôle les moyens d'avertissement Pk et/ou RD du réseau (auto)routier identifié. Cette communication est destinée à adresser à cet équipement de réseau ER un message d'alerte qui désigne le véhicule identifié, afin qu'il le diffuse au moyen de certains au moins des moyens d'avertissement Pk et/ou RD qu'il contrôle. On notera que la communication peut également servir à signaler la voie de circulation sur laquelle circule le véhicule identifié, ainsi qu'éventuellement la portion de cette voie de circulation afin de procéder à un affichage sélectif.

Une troisième étape principale (iii) du procédé selon l'invention est mise en oeuvre consécutivement à la détermination d'un identifiant de communication d'un équipement de communication Ej qui est utilisé par une personne qui est censée utiliser la voiture objet d'une alerte.

Cette troisième étape principale (iii) peut par exemple être initiée (et contrôlée) par le dispositif D.

Cette troisième étape principale (iii) consiste à établir une communication avec l'équipement de communication Ej qui est associé à l'identifiant de communication déterminé lors de la deuxième étape principale (ii). Cette communication est destinée à délivrer un message d'alerte relatif au véhicule objet d'une alerte à la personne qui est censée utiliser ce véhicule.

On comprendra que c'est le serveur SS qui est chargé, sur ordre du dispositif D, d'établir la communication avec l'équipement de communication Ej dont l'identifiant de communication a été déterminé dans les moyens de stockage MS1.

Le dispositif D comprend plus précisément des moyens (ou module) de contrôle MC qui sont agencés de manière à ordonner au serveur SS d'établir une communication avec un équipement de communication Ej qui est associé à un identifiant de communication déterminé, de manière à lui délivrer un message d'alerte relatif au véhicule objet de l'alerte.

L'objectif étant d'alerter le plus vite possible la personne qui est censée utiliser un véhicule objet d'une alerte, on comprendra qu'il est particulièrement avantageux que son équipement de communication Ej soit un téléphone mobile (ou tout équipement de communication sans fil équivalent).

Il est important de noter que le message d'alerte peut être communiqué par un échange de propos lors d'un appel téléphonique avec l'équipement de communication Ej identifié, ou au moyen d'un message vocal délivré à la messagerie vocale associée à l'équipement de communication Ej identifié, ou au moyen d'un message textuel transmis à l'équipement de communication Ej identifié, comme par exemple un courriel (ou « e-mail ») ou un message court de type SMS ou MMS.

Par ailleurs, le contenu informatif d'un message d'alerte est préférentiellement généré par le module de contrôle MS, puis communiqué au serveur SS. Ce contenu informatif contient au moins une phrase signalant qu'un évènement concerne un véhicule identifié au moins par son numéro d'immatriculation.

Lorsque l'alerte contient non seulement un numéro d'immatriculation d'un véhicule, mais également une description au moins sommaire d'un évènement concernant ce véhicule, il est avantageux que le message d'alerte qui est délivré par le serveur SS décrive au moins sommairement cet évènement. En variante ou en complément, lorsque le message d'alerte est transmis sous la forme d'un message de type MMS et que l'alerte correspondante était accompagnée d'une photographie de l'évènement, ce message d'alerte peut être accompagné de cette photographie.

On notera que dans une autre variante on peut recevoir une alerte accompagnée d'une photographie de l'évènement, puis procéder à l'analyse de cette photographie (par exemple par reconnaissance de forme) afin d'en déduire un descriptif au moins sommaire de l'évènement qu'il illustre, lequel est ensuite intégré dans le message d'alerte.

On notera qu'une fois que le service d'alerte (dédié) a été alerté pour la première fois d'un évènement concernant un véhicule immatriculé, il est possible d'effectuer pendant une durée choisie T un filtrage des alertes qui sont postérieures à cette première alerte et bien entendu qui sont relatives à ce même véhicule. Cette fonction de filtrage peut par exemple être préalablement autorisée (ou bien interdite) par la personne qui utilise ce véhicule.

La durée choisie peut par exemple être comprise entre environ 1 minute et environ 15 minutes.

Le filtrage peut par exemple consister à comparer entre eux (lorsque cela est possible) les descriptifs d'évènement qui concernent un même véhicule (désigné par son numéro d'immatriculation) pendant la durée choisie T. Il peut être réalisé par un module d'analyse MA que comprend optionnellement le dispositif D et qui est couplé à ses module de traitement MT et module de contrôle MC.

Si le module d'analyse MA découvre qu'il existe une similitude entre un descriptif d'évènement concernant un véhicule, qui a été reçu en premier et donc qui est stocké dans les moyens de stockage MS2, et un nouveau descriptif d'évènement concernant ce même véhicule et qui a été reçu postérieurement au premier, alors il rejette ce descriptif en interdisant son stockage dans les moyens de stockage MS2 et donc en interdisant qu'il fasse l'objet d'un nouvel envoi de message d'alerte (lequel serait redondant avec le précédent).

Si le module d'analyse MA découvre qu'il n'existe pas de similitude entre un descriptif d'évènement concernant un véhicule, qui a été reçu en premier et donc qui est stocké dans les moyens de stockage MS2, et un nouveau descriptif d'évènement concernant ce même véhicule, et qui a été reçu postérieurement au premier, cela signifie que l'on est vraisemblablement en présence d'un nouvel évènement concernant ce véhicule. Le module d'analyse MA peut alors alerter le module de contrôle MC de son dispositif D, afin que ce dernier (MC) ordonne au serveur SS d'établir une nouvelle communication avec l'équipement de communication qui est associé à l'identifiant de communication déterminé, pour lui délivrer un nouveau message d'alerte décrivant au moins sommairement ce nouvel évènement. Le module d'analyse MA procède alors au stockage de ce nouveau descriptif d'évènement dans les moyens de stockage MS2 en correspondance du numéro d'immatriculation du véhicule ainsi qu'éventuellement de sa date de réception.

Chaque comparaison peut par exemple comporter une analyse sémantique des descriptifs d'évènement destinée à en déduire des mots et/ou des expressions signifiants (et donc permettant de caractériser un évènement), suivie d'une détermination de niveau ou pourcentage de correspondance entre descriptifs d'évènement.

On notera que le module d'analyse MA peut être également et éventuellement utilisé lors d'une deuxième étape principale (ii) après qu'un identifiant de communication ait été déterminé. En effet, le module d'analyse MA peut par exemple servir à analyser une description d'évènement reçue afin de déterminer si cet évènement mérite d'être signalé par un message d'alerte. Pour ce faire, le module d'analyse MA peut par exemple effectuer une analyse sémantique de la description d'évènement reçue afin d'en déduire des mots et/ou des expressions signifiants (et donc permettant de caractériser un évènement), puis comparer le résultat de cette analyse à des descriptifs d'évènements répertoriés qu'il stocke dans des fichiers (par exemple).

On comprendra que si le module d'analyse MA estime qu'un évènement mérite d'être signalé, il le signale au module de contrôle MC qui se charge ensuite de générer un message d'alerte correspondant. Dans le cas contraire, le module d'analyse MA met fin au traitement de l'alerte reçue.

On notera également que lorsque le serveur SS ne réussit pas à établir une communication avec un équipement de communication Ej identifié, et donc ne réussit pas à communiquer un message d'alerte à la personne qui l'utilise, ou bien tant que le serveur SS (ou service dédié) n'a pas reçu d'un équipement de communication Ej identifié un accusé de réception du message d'alerte qu'il lui a délivré, on peut réitérer la troisième étape principale (iii), éventuellement périodiquement pendant une durée choisie. Cette durée choisie peut par exemple être comprise entre environ 1 minute et environ 15 minutes.

Dans ce cas, c'est le module de contrôle MC qui peut par exemple ordonner périodiquement de tenter d'établir une communication avec un équipement de communication Ej identifié.

Lorsque le serveur SS a réussi à établir une communication avec un équipement de communication Ej identifié, et donc a réussi à communiquer un message d'alerte à la personne qui l'utilise, ou bien lorsque le serveur SS (ou service dédié) a reçu d'un équipement de communication Ej identifié un accusé de réception du message d'alerte qu'il lui a délivré, le module de contrôle MC en est averti afin qu'il cesse de solliciter le serveur SS pour le même évènement.

Lorsque l'on a demandé à un réseau (auto)routier de diffuser un message d'alerte, et que le serveur SS a réussi à établir une communication avec un équipement de communication Ej identifié ou a reçu d'un équipement de communication Ej identifié un accusé de réception du message d'alerte qu'il lui a délivré, le module de contrôle MC en est averti et ordonne au serveur SS d'avertir l'équipement de réseau ER afin qu'il cesse de diffuser ce message d'alerte avec ses moyens d'avertissement Pk et/ou RD.

## Revendications

1. Procédé d'alerte de personnes disposant d'un véhicule ayant un numéro d'immatriculation et d'un équipement de communication (Ej) associé à un identifiant de communication, **caractérisé en ce qu'**il comprend les étapes suivantes en cas de détection d'un évènement concernant un véhicule immatrïculé : i) alerter un service dédié en communiquant au moins le numéro d'immatriculation dudit véhicule, ii) déterminer dans des moyens de stockage (MS1), auxquels a accès ledit service dédié et dans lesquels sont stockés des identifiants de communication d'équipements de communication (Ej) de personnes en correspondance de numéros d'immatriculation de véhicules, l'identifiant de communication correspondant audit numéro d'immatriculation communiqué, et iii) établir une communication avec l'équipement de communication (Ej), associé audit identifiant de communication déterminé, pour lui délivrer un message d'alerte relatif audit véhicule.

2. Procédé selon la revendication 1, **caractérisé en ce qu'**à l'étape i) on alerte ledit service dédié en communiquant le numéro d'immatriculation dudit véhicule et en décrivant au moins sommairement ledit évènement.

3. Procédé selon la revendication 2, **caractérisé en ce qu'**à l'étape iii) on délivre un message d'alerte décrivant au moins sommairement ledit évènement concernant ledit véhicule.

4. Procédé selon l'une des revendications 1 à 3, **caractérisé en ce qu'**à l'étape i) après que ledit service dédié ait été alerté une première fois d'un évènement concernant un véhicule immatriculé, on effectue pendant une durée choisie un filtrage des alertes postérieures relatives audit véhicule.

5. Procédé selon l'une des revendications 1 à 4, **caractérisé en ce qu'**en cas d'impossibilité d'établir ladite communication avec l'équipement de communication (Ej) ou bien tant que ledit service dédié n'a pas reçu un accusé de réception dudit message d'alerte délivré, on réitère l'étape iii), éventuellement périodiquement pendant une durée choisie.

6. Procédé selon l'une des revendications 1 à 5, **caractérisé en ce qu'**à l'étape ii), après avoir déterminé ledit identifiant de communication correspondant audit numéro d'immatriculation communiqué, on détermine le lieu où se trouve situé l'équipement de communication (Ej) associé à cet identifiant de communication, et si cet équipement de communication (Ej) est situé dans un véhicule qui circule sur une voie de circulation équipée de moyens d'avertissement (Pk, RD), on adresse un message d'alerte désignant ledit véhicule ayant ledit numéro d'immatriculation communiqué, au moyen de certains au moins desdits moyens d'avertissement (Pk, RD).

7. Dispositif d'alerte (D) pour un serveur (SS) destiné à être connecté à un réseau de communication (RC), **caractérisé en ce qu'**il comprend i) des moyens de traitement (MT) agencés, en cas de réception par ledit serveur (SS) d'une alerte, signalant la détection d'un évènement concernant un véhicule immatriculé utilisé par une personne disposant en outre d'un équipement de communication (Ej) associé à un identifiant de communication, et contenant au moins le numéro d'immatriculation dudit véhicule, pour déterminer dans des moyens de stockage (MS1), dans lesquels sont stockés des identifiants de communication d'équipements de communication (Ej) de personnes en correspondance de numéros d'immatriculation de véhicules, l'identifiant de communication qui correspond audit numéro d'immatriculation contenu dans ladite alerte reçue, et ii) des moyens de contrôle (MC) agencés pour ordonner audit serveur (SS) d'établir une communication avec l'équipement de communication (Ej), associé audit identifiant de communication déterminé, de manière à lui délivrer un message d'alerte relatif audit véhicule.

8. Dispositif selon la revendication 7, **caractérisé en ce que** lesdits moyens de contrôle (MC) sont agencés, en cas de réception par ledit serveur (SS) d'une alerte contenant en outre une description au moins sommaire dudit évènement, pour ordonner audit serveur (SS) d'établir une communication avec l'équipement de communication (Ej), associé audit identifiant de communication déterminé, de manière à lui délivrer un message d'alerte décrivant au moins sommairement ledit évènement concernant ledit véhicule.

9. Dispositif selon la revendication 8, **caractérisé en ce qu'**il comprend des moyens d'analyse (MA) agencés, après que lesdits moyens de traitement (MT) ont déterminé ledit identifiant de communication correspondant audit numéro d'immatriculation communiqué, pour analyser ladite description de l'évènement afin de déterminer si il mérite d'être signalé par un message d'alerte.

10. Dispositif selon la revendication 9, **caractérisé en ce que** lesdits moyens d'analyse (MA) sont agencés, après traitement d'une première alerte relative à un évènement concernant un véhicule immatriculé, pour effectuer pendant une durée choisie une analyse des alertes postérieures relatives audit véhicule.

11. Dispositif selon la revendication 10, **caractérisé en ce que** lesdits moyens d'analyse (MA) sont agencés pour comparer entre eux les descriptifs d'évènement, et en cas de similitude entre le descriptif d'évènement reçu en premier et un nouveau descriptif d'évènement postérieur au premier, pour stocker ce dernier, et en cas d'absence de similitude entre le descriptif d'évènement reçu en premier et un nouveau descriptif d'évènement postérieur au premier, pour alerter lesdits moyens de contrôle (MC) de sorte qu'ils ordonnent audit serveur (ss) d'établir une nouvelle communication avec l'équipement de communication (Ej), associé audit identifiant de communication déterminé, pour lui délivrer un nouveau message d'alerte décrivant au moins sommairement ce nouvel évènement.

12. Dispositif selon l'une des revendications 7 à 11, **caractérisé en ce que** lesdits moyens de contrôle (MC) sont agencés, en cas d'impossibilité d'établir ladite communication avec l'équipement de communication (Ej) ou bien tant que ledit serveur (SS) n'a pas reçu un accusé de réception dudit message d'alerte délivré, pour ordonner audit serveur (SS) d'effectuer une nouvelle tentative d'établissement de communication, éventuellement périodiquement pendant une durée choisie.

13. Dispositif selon l'une des revendications 7 à 12, **caractérisé en ce qu'**il comprend des moyens de localisation (ML) agencés, après que lesdits moyens de traitement (MT) ont déterminé ledit identifiant de communication correspondant audit numéro d'immatriculation communiqué, pour déterminer le lieu où se trouve situé l'équipement de communication (Ej) associé à cet identifiant de communication, et si cet équipement de communication (Ej) est situé dans un véhicule qui circule sur une voie de circulation équipée de moyens d'avertissement (Pk, RD), pour alerter lesdits moyens de contrôle (MC) de sorte qu'ils ordonnent audit serveur (SS) d'établir une communication avec un équipement de réseau (ER) contrôlant lesdits moyens d'avertissement (Pk, RD) de manière à lui adresser un message d'alerte désignant ledit véhicule ayant ledit numéro d'immatriculation communiqué pour qu'il le diffuse au moyen de certains au moins desdits moyens d'avertissement (Pk, RD).

14. Programme informatique destiné à être utilisé par un serveur (SS) propre à être connecté à un réseau de communication (RC), **caractérisé en ce qu'**il constitue un dispositif d'alerte (D) selon l'une des revendications 7 à 13.

15. Serveur (SS) propre à être connecté à un réseau de communication (RC), **caractérisé en ce qu'**il comprend un dispositif d'alerte (D) selon l'une des revendications 7 à 13.
